# EUROPÄISCHE PATENTANMELDUNG

(11) **EP 2 840 503 A1**
(43) Veröffentlichungstag der Anmeldung: **25.02.2015**
(21) Anmeldenummer: 13181351.1
(22) Anmeldetag: 22.08.2013
(51) Int. Cl.: G06F 12/08, G06F 9/54, G06F 9/38

(54) **Verfahren zum Betreiben eines Pufferspeichers einer Datenverarbeitungsanlage und Datenverarbeitungsanlage**

(71) Anmelder: Continental Automotive GmbH, 30165 Hannover (DE)
(72) Erfinder: Göbel, Andre, 93053 Regensburg (DE); Mader, Ralph, 93077 Bad Abbach (DE); Tripon, Ovidiu, 300693 Timisoara (RO)

(57) **Zusammenfassung**

Die Erfindung betrifft ein Verfahren zum Betreiben eines Pufferspeichers einer Datenverarbeitungsanlage auf welchem zwei oder mehrere Programme parallel ablaufen können, wobei das Verfahren (20) folgende Schritte aufweist:
- Erzeugen eines Quellcodesfür ein auszuführendes Programm und Speichern von benötigten Daten des auszuführenden Programms in dem Pufferspeicher (21);
- gleichzeitiges Generieren von mindestens einem Adressregister, dessen Speicherinhalt Adressen von jedem der zwei oder mehreren Programme auf dem Pufferspeicher sind (22);
- Zugreifen der zwei oder mehreren Programme auf den Pufferspeicher über das mindestens eine Adressregister (23);

## Beschreibung

Die Erfindung betrifft ein Verfahren zum Betreiben eines Pufferspeichers einer Datenverarbeitungsanlage, mit welchem der Zugriff von auf der Datenverarbeitungsanlage ablaufenden Programmen auf einen Pufferspeicher, in welchem Daten eines anderen ausgeführten Programms gespeichert sind, geregelt wird.

In Datenverarbeitungsanlagen werden zur Steigerung der Leistungsfähigkeit schnelle Pufferspeicher zwischen einer Zentraleinheit und einem Systemspeicher eingesetzt. Diese Pufferspeicher erzielen ihre hohe Wirksamkeit dadurch, dass von den Prozessoren auf Speicheradressen häufig kurz hintereinander mehrfach zugegriffen wird.

Bei gewöhnlichen Datenverarbeitungsanlagen werden mehr und mehr Mehrkernprozessoren verwendet, welche in einem Prozessor mehrere Kerne zusammenschalten. In Mehrkernprozessoren werden viele Aufgaben in Prozesse, sogenannte Tasks aufgeteilt. Diese Tasks werden parallel von mehreren Prozessorkernen, durch auf den Prozessorkernen ablaufende Programme, abgearbeitet.

Weiter sind gewöhnliche Betriebssysteme einer Datenverarbeitungsanlage in der Lage, ein sogenanntes Multitasking zu ermöglichen, das heißt mehrere Programme gleichzeitig abzurufen und deren Ablauf zu kontrollieren. In diese Kontrollfunktion integriert sind beispielsweise die Darstellungen des jeweiligen Betriebszustandes und/oder der Ergebnisse auf einer mit der Datenverarbeitungsanlage verbundenen Anzeigeeinheit oder einer anderen Ausgabeeinheit, der Abruf von benötigten Daten für das jeweils ablaufende Programm, die Speicherung von Zwischenund/oder Endergebnissen, die Zuweisung von benötigten Ressourcen sowie die Bekanntgabe von eventuellen Fehlermeldungen vorgegebener Ziele. Des Weiteren kann die Übertragung von Daten, welche von einem Programm in einem anderen Prozess produziert werden, an ein anderes Rechnersystem, an ein Netzwerk oder an einen Server im Rahmen der Aufgabenstellung des jeweiligen Prozesses notwendig werden oder Bestandteil der Ursprungsfunktion sein.

Dabei werden in derartigen Datenverarbeitungsanlagen mehrere Programme jeweils in einem eigenen Datenbereich und mit eigenen Daten abgearbeitet, ohne eine Wechselbeziehung zueinander einzugehen. Jedes Programm hat einen eigenen, aus einer Aneinanderreihung einer Vielzahl von Schritten bestehenden Ablauf, der für einen ordnungsgemäßen Verlauf oder eine entsprechende Meldung über eine Störung dieses ordnungsgemäßen Verlaufs und die Erfüllung der jeweils dem Programm zugeordneten Aufgabe sorgt.

Beispielsweise im Umfeld der Medizintechnik oder bei Steuergeräten eines Kraftfahrzeuges können zur Abarbeitung eines Gesamtprogramms einer Datenverarbeitungsanlage jedoch auch mehrere Programme oder auch Teilprogramme verwendet werden. Ein Prozess, welcher auch als Task bezeichnet wird, ist dabei aus der Sicht des Betriebssystems eine in sich geschlossene Ablaufeinheit, die durch ein Programm oder ein Programmteil repräsentiert ist. Dabei können Situationen auftreten, in welchen ein Programm oder Teilprogramm auf Daten zugreifen muss, welche von einem Programm in einem anderen Prozess produziert werden und in einem Pufferspeicher eines anderen Programms hinterlegt sind.

Aus der Druckschrift DE 42 36 820 C2 ist eine Multitasking-Datenverarbeitungsanlage bekannt, bei welcher der Zugriff auf einen Pufferspeicher intern über Zeiger verwaltet wird. Aufgabe der vorliegenden Erfindung ist es, ein Verfahren zum Betreiben eines Pufferspeichers einer Datenverarbeitungsanlage anzugeben, welches einen besonders bedarfsgerechten Zugriff auf einen Pufferspeicher auch von wechselnden Prozessen beziehungsweise Programmen aus auf besonders einfache Weise ermöglicht.

Gelöst wird diese Aufgabe durch den Gegenstand der unabhängigen Ansprüche. Weitere vorteilhafte Weiterbildungen sind Gegenstand der abhängigen Ansprüche.

Gemäß einer Ausführungsform der Erfindung wird diese Aufgabe gelöst durch ein Verfahren zum Betreiben eines Pufferspeichers einer Datenverarbeitungsanlage, auf welcher zwei oder mehrere Programme parallel ablaufen können. Das Verfahren weist dabei folgende Schritte auf: So wird ein Quellcode für ein auszuführendes Programm erzeugt und werden benötigte Daten des auszuführenden Programms in dem Pufferspeicher gespeichert. Gleichzeitig wird mindestens ein Adressregister generiert, dessen Speicherinhalt Adressen von jedem der zwei oder mehreren Programme auf den Pufferspeicher sind. Anschließend greifen die zwei oder mehreren Programme auf den Pufferspeicher über das mindestens eine Adressregister zu.

Grundgedanke ist somit, spätestens vor der Ausführung eines Programms, ein Adressregister zu generieren, aus dem die Basisadresse des Pufferspeichers, in welchem benötigte Daten des auszuführenden Programms gespeichert sind, abzulesen ist.

Ein derartiges Verfahren hat den Vorteil, dass ein besonders bedarfsgerechter Zugriff auf einen Pufferspeicher auch von wechselnden Prozessen beziehungsweise Programmen aus auf besonders einfache Weise ermöglicht wird. So wird durch die Adressierung des Pufferspeichers ausgehend von den zwei oder mehreren Programmen über das mindestens eine Adressregister ein schneller Zugriff der zwei oder mehr Programme auf die in dem Pufferspeicher gespeicherten Daten in einem Schritt gewährleistet, insbesondere auch ein schneller Zugriff eines Programms auf PDaten eines weiteren Programms. Weiter wird dieser Zugriff hierbei im Hinblick auf Ressourcenverbrauch und Rechenzeit der Datenverarbeitungsanlage optimiert. So führen Prozessoren, welche ein gemeinsames Adress- und Datensammel-Leitungssystem aufweisen, welches als Bus bezeichnet wird, Instruktionen sequentiell aus. Bei einer internen Pufferverwaltung über Zeiger wird hierbei zunächst eine Instruktionsadresse auf den Bus gegeben in einem Adressregister abgespeichert. Anschließend wird die adressierte Instruktion mit einer zeitlichen Verzögerung, je nach der Zugriffszeit des Systemspeichers, in den Prozessor eingelesen. Bei der anschließenden Ausführung dieser Instruktionen im Prozessor werden über denselben Bus Datenadressen und die Daten selbst ein- beziehungsweise ausgegeben. Damit ist eine nicht unerhebliche Auslastung des Buses mit Instruktionsadressen verbunden, welche zu einer oftmals beträchtlichen zeitlichen Verlängerung der Abarbeitung von Programmabläufen führt. Auch sind schnelle Adressverwaltungen in Form von Adressregistern in der Informatik oder Digitaltechnik, insbesondere im Bereich von Mikrocontrollern, gebräuchlich und bezeichnen eine Datenbank, welche für die Eingabe von Adressen gedacht ist, sowie eine Datenbank mit einfachen Suchfunktionen. Diese ist schnell und einfach zu implementieren, so dass diese hier einfach und ohne großen Aufwand realisiert werden kann.

Gemäß einer Ausführungsform kann es sich bei der Datenverarbeitungsanlage dabei um eine präemptive und/oder cooperative Multitasking-Datenverarbeitungsanlage handeln. Betriebssysteme, welche im Multitasking- beziehungsweise Mehrprozessbetrieb arbeiten, führen mehrere Aufgaben, das heißt Prozesse, nebenläufig aus. Die dabei standardmäßig angewandten Methoden sind das cooperative und das präemptive Multitasking, bei dem ein Betriebssystemkern die Abarbeitung der einzelnen Prozesse steuert und jeden Prozess nach einer bestimmten Abarbeitungszeit zugunsten anderer Prozesse anhält. Durch das mindestens eine Adressregister kann hierbei gewährleistet werden, dass ein Programm, welches zur Realisierung eines Prozesses dient, schnell und zeitnah auf Daten eines weiteren Programms zugreifen kann, auch wenn dieses zugunsten anderer Prozesse angehalten wurde, wobei Ressourcen und Rechenzeit verglichen mit einer internen Speicherverwaltung über Zeiger, welche für gewöhnlich genau dann stattfindet, wenn die Daten benötigt werden, eingespart werden können.

Gemäß einer weiteren Ausführungsform kann die Datenverarbeitungsanlage auch einen Mehrkernprozessor umfassen. Im Mehrkernprozessoren-System werden viele Aufgaben in Tasks aufgeteilt. Diese Tasks werden parallel von mehreren Prozessorkernen abgearbeitet. Hierbei können Situationen auftreten, in welchen ein Task abhängig von einem anderen Task ist, das heißt Situationen, in welchen ein Programm, welches zur Realisierung eines Tasks dient, auf die Daten eines weiteren auf einem Prozessorkern des Mehrkernprozessors abgearbeiteten Programms zugreifen muss. Durch die Verwendung des mindestens einen Adressregisters kann hierbei wiederum ein schneller und zeitnaher Zugriff auf diese Daten gewährleistet werden, wobei wiederum Ressourcen und Rechenzeit im Vergleich mit einer internen Speicherverwaltung über Zeiger eingespart werden können.

Auch kann die Datenverarbeitungsanlage ein Echtzeit-Betriebssystem aufweisen. In einem Echtzeitsystem laufen in der Regel mehrere Tasks auf verschiedenen Prioritäten und müssen zeitnah ausgeführt werden. Insbesondere in Echtzeit-Betriebssystemen und Echtzeit-Betriebssystemkernen ist es folglich nötig, dass die Kommunikation von Programmen, das heißt den Tasks, zeitnah und schnell erfolgt, insbesondere dass die einzelnen Programme schnell und zuverlässig auf Daten weiterer Programme zugreifen können, ohne dass hierbei beispielsweise Verzögerungen auftreten.

Weiter kann das mindestens eine Adressregister dabei in Kontextspeicher abgelegt werden, auf welchen die zwei oder mehreren Programme zugreifen. Eine Eigenschaft eines Prozesses ist, dass ein Prozess stets auf einen eigenen Speicherbereich zugreift. Ein Prozess besteht aus mehreren Threads, welche Programmteile eines Prozesses sind. Ein Kontext eines Threads ist der Prozessorzustand eines Prozessors, welcher diesen Thread beziehungsweise Programmbefehle dieses Threads bearbeitet. Demnach ist der Kontext eins Threads definiert als ein temporärer Prozessorzustand während der Bearbeitung des Threads durch diesen Prozessor. Der Kontext wird von der Hardware des Prozessors, nämlich dem Programmzählregister beziehungsweise Programmcounter, dem Registerfile beziehungsweise dem Kontextspeicher und dem dazugehörigen Statusregister gehalten. Die einzelnen Programme greifen somit unabhängig von der gewählten Betriebsart beziehungsweise dem gewählten Betriebssystem stets nur auf Kontextspeicher und das mindestens eine Adressregister zu. Über das mindestens eine Adressregister kann dann direkt auf die Speichereinheit, das heißt den Pufferspeicher, zugegriffen werden. Dies erfordert entsprechend weniger Taktschritte und beschleunigt daher weiter den Ablauf des Verfahrens, das heißt den Zugriff der zwei oder mehreren Programme auf den Pufferspeicher.

Der Pufferspeicher kann dabei aus Pufferzeilen aufgebaut sein. Weiter können die zwei oder mehreren Programme lesend und/oder schreibend auf den Pufferspeicher derart zugreifen, dass dieselben PDaten von den zwei oder mehreren Programmen aus jeweils in dieselbe Pufferzeile geschrieben werden. Hierdurch kann weiter eine Speicherkohärenz sichergestellt werden. Durch die Sicherstellung von Kohärenz wird verhindert, dass für dieselbe Speicheradresse unterschiedliche, inkonsistente Daten zurückgeliefert werden. Pufferspeicher benutzen dabei als Pufferzeile bezeichnete Blöcke von Daten, die fast immer ein Vielfaches einer Wortbreite des Prozessors betragen und häufig sogar ein Mehrfaches der Breite des die Prozessoren mit einem Systemspeicher verbindenden Buses ausmachen.

Auch kann der Inhalt des Pufferspeichers nach Beendigung des auszuführenden Programms in einen Systemspeicher der Datenverarbeitungsanlage geschrieben werden. Hierdurch kann gewährleistet werden, dass bei einem Neustart des entsprechenden Programms die einzelnen Programmteile, das heißt die zugehörigen Programmdaten, in der letzten verwendeten Version vorliegen, wobei der Bus zwischen Prozessor und Systemspeicher genutzt werden kann, ohne dass es dabei zu einer nicht unerheblichen Auslastung des Busses kommt.

Mit einer weiteren Ausführungsform der Erfindung wird auch eine Datenverarbeitungsanlage angegeben, auf welcher zwei oder mehrere Programme parallel ablaufen können und welche wenigstens einen Prozessor mit einem Systemspeicher, in welchem zwei oder mehrere Programme zur Steuerung beziehungsweise Regelung des wenigstens einen Prozessors abgelegt sind, aufweist. Weiter weist die Datenverarbeitungsanlage wenigstens einen Pufferspeicher, ein Initialisierungsmodul zum Erzeugen eines Quellcodes für ein auszuführendes Programm beim Start des auszuführenden Programms, eine Eingabe/Ausgabe-Einheit zum Lesen von Daten in den wenigstens einen Pufferspeicher und/oder zum Schreiben von Daten in den wenigstens einen Pufferspeicher, welche ausgebildet ist, mit Erzeugen des Quellcodes benötigte Daten des auszuführenden Programms in dem wenigstens einen Pufferspeicher zu speichern, sowie einen Adressgenerator auf. Dabei ist der Adressgenerator ausgebildet, mit dem Speichern der benötigten Daten in dem wenigstens einen Pufferspeicher mindestens ein Adressregister zu generieren, dessen Speicherinhalt Adressen von jedem der zwei oder mehreren Programme auf den Pufferspeicher sind. Auch ist die Eingabe/Ausgabe-Einheit ausgebildet, von jedem der zwei oder mehreren Programme über das mindestens eine Adressregister auf den wenigstens einen Pufferspeicher zuzugreifen.

Eine derartige Datenverarbeitungsanlage hat den Vorteil, dass diese ausgebildet ist, einen besonders bedarfsgerechten Zugriff auf einen Pufferspeicher auch von wechselnden Prozessen beziehungsweise Programmen aus auf besonders einfache Weise zu ermöglichen. So wird dadurch, dass die Datenverarbeitungsanlage ausgebildet ist, gleichzeitig mit Initialisierung eines auszuführenden Programms mindestens ein Adressregister zu generieren, aus dem die Basisadresse des Pufferspeichers, in welchem benötigte Daten des auszuführenden Programms gespeichert sind, abzulesen ist, ein schneller Zugriff der zwei oder mehreren Programme auf die im Pufferspeicher abgelegten Daten in einem Schritt gewährleistet. Insbesondere wird auch ein schneller Zugriff eines Programms auf Daten eines weiteren Programmteils gewährleistet. Weiter wird die Datenverarbeitungsanlage dabei im Hinblick auf Ressourcenverbrauch und Rechenzeit optimiert. So führen Prozessoren, welche ein gemeinsames Adress- und Datensammel-Leitungssystem aufweisen, welches als Bus bezeichnet wird, Instruktionen sequentiell aus. Bei einer internen Pufferverwaltung über Zeiger wird hierbei zunächst eine Instruktionsadresse auf den Bus gegeben und in einem Adressregister abgespeichert. Anschließend wird die adressierte Instruktion mit einer zeitlichen Verzögerung, je nach der Zugriffszeit des Systemspeichers, in den Prozessor eingelesen. Bei der anschließenden Ausführung dieser Instruktionen im Prozessor werden über denselben Bus Datenadressen und die Daten selbst einbeziehungsweise ausgegeben. Damit ist eine nicht unerhebliche Auslastung des Buses mit Instruktionsadressen verbunden, welche zu einer oftmals beträchtlichen zeitlichen Verlängerung der Abarbeitung von Programmabläufen führt. Auch sind schnelle Adressverarbeitungen bei Datenverarbeitungsanlagen in Form von Adressregistern in der Informatik oder Digitaltechnik, insbesondere im Bereich von Mikrocontrollern, gebräuchlich und bezeichnen eine Datenbank, welche für die Eingabe von Adressen gedacht ist, sowie eine Datenbank mit einfachen Suchfunktionen. Diese ist dabei schnell und einfach zu implementieren, so dass diese hier einfach und ohne großen Aufwand realisiert werden kann.

Gemäß einer Ausführungsform handelt es sich bei der Datenverarbeitungsanlage dabei um eine präemptive und/oder cooperative Multitasking-Datenverarbeitungsanlage. Betriebssysteme, welche im Multitasking- beziehungsweise Mehrprozessbetrieb arbeiten, führen mehrere Aufgaben, das heißt mehrere Prozesse, nebenläufig aus. Die standardmäßig angewandten Methoden sind das cooperative und das präemptive Multitasking, bei dem ein Betriebssystemkern die Abarbeitung der einzelnen Prozesse steuert und jeden Prozess nach einer bestimmten Abarbeitungszeit zugunsten anderer Prozesse anhält. Durch das mindestens eine Adressregister ist die Datenverarbeitungsanlage hierbei ausgebildet, zu gewährleisten, dass ein Programm, welches zur Realisierung eines Prozesses dient, schnell und zeitnah auf Daten eines weiteren Prozesses zugreifen kann, auch wenn dieser zugunsten anderer Prozesse angehalten wurde. Dabei können Ressourcen und Rechenzeit verglichen mit einer internen Speicherverwaltung über Zeiger, welche für gewöhnlich genau dann stattfindet, wenn die Daten benötigt werden, eingespart werden. Beispiele für derartige präemptive Multitasking-Datenverarbeitungsanlagen sind Datenverarbeitungsanlagen zur Realisierung von bildgebenden medizinischen Verfahren, bei welchen Datenmengen anfallen, welche in geeigneter Form einer nachgeordneten Bearbeitung in verschiedenen Programmen, beispielsweise zu Auswertungszwecken zur Verfügung gestellt werden müssen.

Gemäß einer weiteren Ausführungsform kann der wenigstens eine Prozessor ein Mehrkernprozessor sein. In Mehrkernprozessor-systemen werden viele Aufgaben in Tasks aufgeteilt. Diese Tasks werden parallel von mehreren Prozessorkernen abgearbeitet. Hierbei können Situationen auftreten, in welchen ein Task abhängig von einem anderen Task ist, das heißt Situationen, in welchen ein Programm, welches zur Realisierung eines Tasks dient, auf die Daten eines weiteren auf einem Prozessorkern des Mehrkernprozessors abgearbeiteten Programms zugreifen muss. Die Datenverarbeitungsanlage ist hierbei durch die Verwendung des mindestens einen Adressregisters ausgebildet, wiederum einen schnellen und zeitnahen Zugriff auf diese Daten zu gewährleisten, wobei wiederum Ressourcen und Rechenzeit im Vergleich mit einer internen Speicherverwaltung über Zeiger eingespart werden können.

Auch kann die Datenverarbeitungsanlage ein Echtzeit-Betriebssystem aufweisen. In einem Echtzeitsystem laufen in der Regel mehrere Tasks auf verschiedenen Prioritäten und müssen zeitnah ausgeführt werden. Insbesondere in Echtzeit-Betriebssystemen und Echtzeit-Betriebssystemkernen ist es folglich nötig, dass die Kommunikation von auf der Datenverarbeitungsanlage ablaufenden Programmen, das heißt den Tasks, zeitnah und schnell erfolgt, insbesondere dass die einzelnen Programme schnell und zuverlässig auf die Daten weiterer Programme zugreifen können, ohne dass hierbei Verzögerungen auftreten.

Weiter kann die Datenverarbeitungsanlage Kontextspeicher aufweisen, in welchen das mindestens eine Adressregister gespeichert wird und auf welche die zwei oder mehreren Programme zugreifen. Eine Eigenschaft eines Prozesses ist, dass ein Prozess stets auf einen eigenen Speicherbereich zugreift. Ein Prozess besteht aus mehreren Threads, welche Programmteile eines Prozesses sind. Ein Kontext eines Threads ist der Prozessorzustand eines Prozessors, welcher diesen Thread beziehungsweise Programmbefehle dieses Threads bearbeitet. Demnach ist der Kontext eins Threads definiert als ein temporärer Prozessorzustand während der Bearbeitung des Threads durch diesen Prozessor. Der Kontext wird von der Hardware des Prozessors, nämlich dem Programmzählregister beziehungsweise Programmcounter, dem Registerfile beziehungsweise dem Kontextspeicher und dem dazugehörigen Statusregister gehalten. Die Datenverarbeitungsanlage ist somit derart ausgebildet, dass die einzelnen auf der Datenverarbeitungsanlage ablaufenden Programme, unabhängig von der gewählten Betriebsart beziehungsweise dem gewählten Betriebssystem, auf den externen Speicher und das mindestens eine Adressregister zugreifen. Über das mindestens eine Adressregister kann dann direkt auf die Speichereinheit, das heißt den wenigstens einen Pufferspeicher, zugegriffen werden. Dies erfordert entsprechend weniger Taktschritte und beschleunigt daher weiter den Zugriff der zwei oder mehreren Programme auf den wenigstens einen Pufferspeicher.

Der wenigstens eine Pufferspeicher kann dabei aus Pufferzeilen aufgebaut sein. Weiter kann die Eingabe/Ausgabe-Einheit ausgebildet sein, dieselben PDaten von jedem der zwei oder mehreren Programme aus in dieselbe Pufferzeile zu schreiben. Die Datenverarbeitungsanlage kann somit derart ausgebildet sein, eine Speicherkohärenz sicherzustellen. Durch die Sicherstellung von Kohärenz wird verhindert, dass für dieselbe Speicheradresse unterschiedliche, inkonsistente Daten zurückgeliefert werden. Pufferspeicher benutzen dabei als Pufferzeile bezeichnete Blöcke von Daten, die fast immer ein Vielfaches einer Wortbreite des Prozessors betragen und häufig sogar ein Mehrfaches der Breite des die Prozessoren mit einem Systemspeicher verbindenden Bussystems ausmachen.

Zudem kann die Eingabe/Ausgabe-Einheit ausgebildet sein, einen Inhalt des wenigstens einen Pufferspeichers nach Beendigung des auszuführenden Programms in dem Systemspeicher zu speichern. Hierdurch kann gewährleistet werden, dass bei einem Neustart des entsprechenden Programms die einzelnen Programmteile, das heißt die zugehörigen Programmdaten, in der Datenverarbeitungsanlage in der letzten verwendeten Version vorliegen, wobei der Bus zwischen Prozessor und Systemspeicher genutzt werden kann, ohne dass es dabei zu einer nicht unerheblichen Auslastung des Busses kommt.

Mit einer weiteren Ausführungsform der Erfindung wird zudem auch ein Steuergerät für ein Kraftfahrzeug angegeben, welches eine oben beschriebene Datenverarbeitungsanlage aufweist. So werden mehr und mehr Steuergeräte eines Kraftfahrzeuges durch Prozessorkerne von Mehrkernprozessoren gebildet, welche die Funktionen des Steuergeräts bereitstellen. Hierbei können beispielsweise Situationen auftreten, in welchen ein Steuerprogramm eines Prozessorkerns abhängig von einer Ausgangsgröße eines anderen Prozessorkerns ist und folglich ein schneller und zeitnaher Zugriff auf diese Daten gewährleistet werden muss.

Zusammenfassend ist festzustellen, dass mit der vorliegenden Erfindung ein Verfahren zum Betreiben eines Pufferspeichers einer Datenverarbeitungsanlage sowie eine Datenverarbeitungsanlage angegeben werden, mit welchen ein besonders bedarfsgerechten Zugriff auf einen Pufferspeicher auch von wechselnden Prozessen beziehungsweise Programmen aus auf besonders einfache Weise ermöglicht wird.

Da gleichzeitig mit Initialisierung eines auszuführenden

Programms mindestens ein Adressregister generiert wird, aus dem die Basisadresse des Pufferspeichers, in welchem benötigte Daten eines auszuführenden Programms gespeichert sind, abzulesen ist, kann ein schneller und zeitnaher Zugriff auf diese Daten gewährleistet werden, wobei Ressourcen und Rechenzeit verglichen mit einer internen Pufferverwaltung über Zeiger eingespart werden können.

Dabei kann weiter Kohärenz sichergestellt werden, indem die Datenverarbeitungsanlage derart ausgebildet ist, dass die zwei oder mehreren Programme dieselben Daten jeweils in dieselbe Pufferzeile des Pufferspeichers schreiben.

Die Erfindung wird nun anhand der beigefügten Figuren näher erläutert.
- Figur 1: zeigt ein schematisches Blockschaltbild einer Datenverarbeitungsanlage gemäß Ausführungsformen der Erfindung;
- Figur 2: zeigt ein Flussdiagramm eines Verfahrens zum Betreiben eines Pufferspeichers einer Datenverarbeitungsanlage gemäß Ausführungsformen der Erfindung.

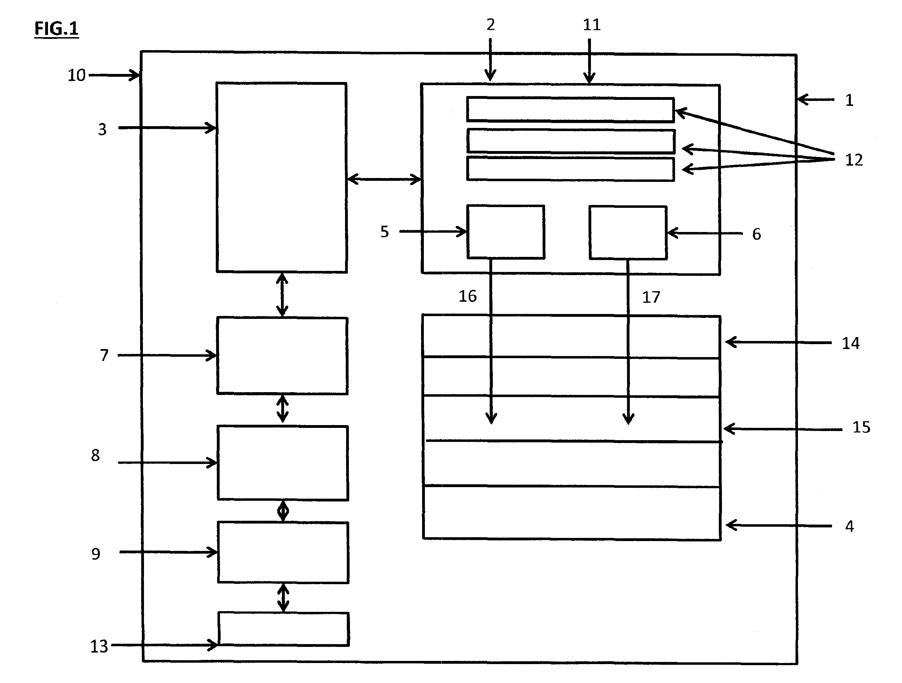

Figur 1 zeigt ein schematisches Blockschaltbild einer Datenverarbeitungsanlage 1 gemäß Ausführungsformen der Erfindung.

In der Datenverarbeitungsanlage 1 gemäß Figur 1 ist vorgesehen, dass eine Anzahl von Prozessen, sogenannten Tasks, von einem Betriebssystem aufgerufen und abgearbeitet werden. Die Datenverarbeitungsanlage 1 gemäß Figur 1 weist hierzu einen Prozessor 2 mit einem Systemspeicher 3 ,in welchem zwei oder mehrere Programme zur Steuerung beziehungsweise Regelung des Prozessors 2 abgelegt sind, auf. Weiter ist ein Pufferspeicher 4 zu erkennen, welcher als schneller Speicher ausgebildet ist. In einem derartigen Pufferspeicher 4 werden Daten temporär gespeichert, insbesondere benötigte Programmteile beziehungsweise Daten eines auszuführenden Programms.

Eine Task 5, 6 besteht für gewöhnlich aus einem Task-Kontroll-Block, einem Programmteil und einem Datenteil. Der Begriff Datenteil der Task 5, 6 ist so zu verstehen, dass die Task 5, 6 Zugriff auf diese Daten hat. Der Datenteil kann sowohl "private" Daten, welche nur einer jeweils bestimmten Task 5, 6 zugeteilt sind, als auch "common" Daten oder einen memory mapped Eingangs/Ausgangs-Datenbereich umfassen. Zur Abarbeitung eines Gesamtprogramms sollen für gewöhnlich mehrere Tasks 5, 6 zur Lösung verschiedener Teilaufgaben parallel eingesetzt werden, wobei sie jeweils ihre berechneten oder in anderer Weise ermittelten Daten in ihrem eigenen Datenbereich ablegen.

Hierbei können Situationen auftreten, in welchen ein Task 5, das heißt ein Programm welches zur Realisierung des Tasks 5 dient, abhängig von den Daten eines anderen Programms, welches der Realisierung eines weiteren Tasks 6 dient, ist und folglich auf dessen Pufferspeicher 4 zugreifen muss. Für gewöhnlich ist hierzu eine interne Pufferverwaltung über Zeiger vorgesehen, welche zu einer nicht unerheblichen Auslastung eines Datenbusses der Datenverarbeitungsanlage führen kann und folglich mit einer beträchtlichen zeitlichen Verlängerung der Abarbeitung von Programmabläufen sowie einem erhöhten Ressourcenverbrauch.

Gemäß der Figur 1 ist hierbei weiter ein Initialisierungsmodul 7 zum Erzeugen eines Quellcodes für ein auszuführendes Programm beim Start des auszuführenden Programms, eine Eingabe/AusgabeEinheit 8 zum Lesen von Daten in den Pufferspeicher 4 und/oder zum Schreiben von Daten in den Pufferspeicher 4, welche ausgebildet ist, mit Erzeugen des Quellcodes benötigte Daten des auszuführenden Programms in den Pufferspeicher 4 zu speichern, sowie ein Adressgenerator 9 vorgesehen, wobei der Adressgenerator 9 ausgebildet ist, mit dem Speichern der benötigten Daten in den Pufferspeicher 4 mindestens ein Adressregister zu generieren, dessen Speicherinhalt Adressen von jedem der zwei oder mehreren Programme auf den Pufferspeicher 4 sind, und wobei die Eingabe/Ausgabe-Einheit 8 ausgebildet ist, von jedem der zwei oder mehreren Programme über das mindestens eine Adressregister auf den Pufferspeicher 4 zuzugreifen.

Bei der Datenverarbeitungsanlage 1 gemäß Figur 1 handelt es sich dabei um eine präemptive Multitasking-Datenverarbeitungsanlage 10. Betriebssysteme, welche im Multitasking- beziehungsweise Mehrprozessbetrieb arbeiten, führen mehrere Aufgaben, das heißt mehrere Tasks 5, 6, nebenläufig aus. Ferner kann es sich bei der Datenverarbeitungsanlage aber auch um eine cooperative Multitasking-Datenverarbeitungsanlage handeln. Die standardmäßig angewandten Methoden sind dabei das cooperative oder das präemptive Multitasking, bei dem ein Betriebssystemkern die Abarbeitung der einzelnen Tasks 5, 6 steuert und jeden Task 5, 6 nach einer bestimmten Abarbeitungszeit zugunsten anderer Tasks 5, 6 anhält.

Wie weiter zu erkennen ist, ist der Prozessor 2 dabei als Mehrkernprozessor 11 ausgebildet. In Mehrkernprozessor-Systemen werden viele Aufgaben in Tasks 5, 6 aufgeteilt, welche parallel von mehreren Prozessorkernen 12 abgearbeitet werden. Ein Mehrkernprozessor 11 kann dabei üblicherweise von zwei bis zu mehreren hundert Prozessorkernen umfassen, wobei in Figur 1 drei Prozessorkerne 12 dargestellt sind, welche jeweils einen Task 5, 6 abarbeiten.

Weiter handelt es sich bei dem Betriebssystem gemäß Figur 1 um ein Echtzeit-Betriebssystem. In einem Echtzeitsystem laufen in der Regel mehrere Tasks 5, 6 auf verschiedenen Prioritäten und müssen zeitnah ausgeführt werden. Insbesondere in Echtzeit-Betriebssystemen und Echtzeit-Betriebssystemkernen ist es folglich nötig, dass die Kommunikation von auf der Datenverarbeitungsanlage ablaufenden Tasks 5, 6 zeitnah und schnell erfolgt, insbesondere dass die einzelnen Tasks 5, 6 schnell und zuverlässig auf Daten weiterer Tasks 5, 6 zugreifen können.

Wie weiter zu erkennen ist, umfasst die Datenverarbeitungsanlage 1 gemäß Figur 1 Kontextspeicher 13, in welchen das mindestens eine Adressregister gespeichert wird und auf welche die zwei oder mehreren Programme zugreifen können. Eine Eigenschaft eines Prozesses ist, dass ein Prozess stets auf einen eigenen Speicherbereich zugreift. Ein Prozess besteht aus mehreren Threads, welche Programmteile eines Prozesses sind. Ein Kontext eines Threads ist der Prozessorzustand eines Prozessors, welcher diesen Thread beziehungsweise Programmbefehle dieses Threads bearbeitet. Demnach ist der Kontext eins Threads definiert als ein temporärer Prozessorzustand während der Bearbeitung des Threads durch diesen Prozessor. Der Kontext wird von der Hardware des Prozessors, nämlich dem Programmzählregister beziehungsweise Programmcounter, dem Registerfile beziehungsweise dem Kontextspeicher und dem dazugehörigen Statusregister gehalten.

Der dargestellte Pufferspeicher 4 ist dabei aus Pufferzeilen 14 aufgebaut. Weiter ist die dargestellte Eingabe/Ausgabe-Einheit 8 ausgebildet, dieselben Daten von jedem der zwei oder mehreren Programme aus in dieselbe Pufferzeile 15 zu schreiben, was durch die mit Bezugszeichen 16 und 17 versehenen Pfeile symbolisiert wird. Hierdurch kann weiter eine Speicherkohärenz sichergestellt werden, da verhindert wird, dass für dieselbe Speicheradresse unterschiedliche, inkonsistente Daten zurückgeliefert werden.

Weiter ist die Eingabe/Ausgabe-Einheit 8 der Figur 1 ausgebildet, einen Inhalt des Pufferspeichers 4 nach Beendigung des auszuführenden Programms in dem Systemspeicher 3 zu speichern, wodurch gewährleistet wird, dass bei einem Neustart des entsprechenden Programms die einzelnen Programmteile, das heißt die zugehörigen Programmdaten, in der letzten verwendeten Version vorliegen.

Die Datenverarbeitungsanlage 1 der Figur 1 ist hierbei insbesondere ausgebildet, die Funktionen eines Steuergeräts eines Kraftfahrzeuges zu realisieren.

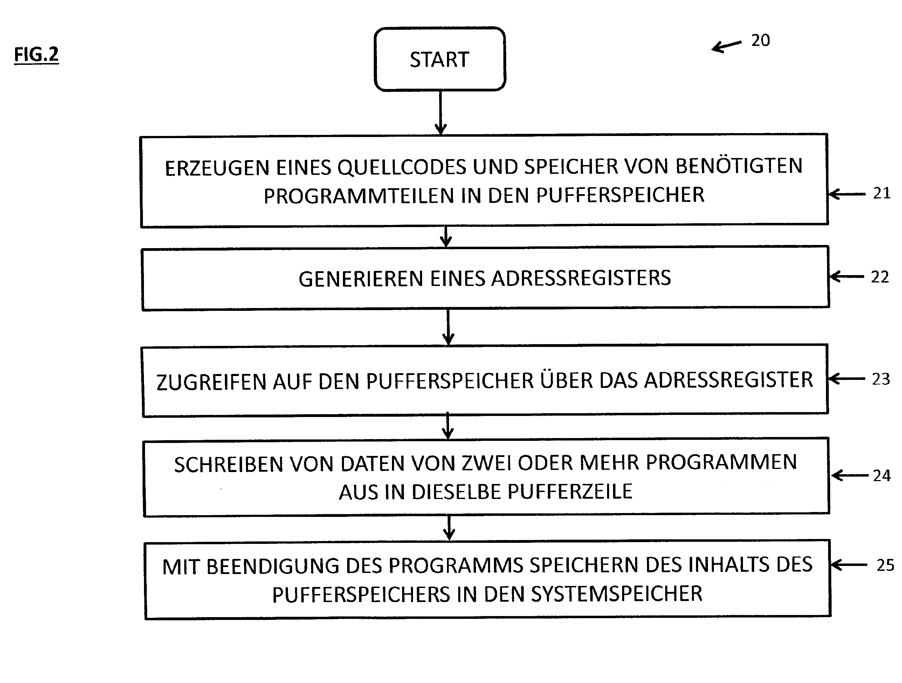

Figur 2 zeigt ein Flussdiagramm eines Verfahrens 20 zum Betreiben eines Pufferspeichers einer Datenverarbeitungsanlage gemäß Ausführungsformen der Erfindung. Auf dieser Datenverarbeitungsanlage können dabei zwei oder mehrere Programme parallel ablaufen.

Wie Figur 2 zeigt, weist das Verfahren 20 dabei folgende Schritte auf: So wird in einem Schritt 21 zunächst ein Quellcode für ein auszuführendes Programm erzeugt und werden benötigte Daten des auszuführenden Programms in dem Pufferspeicher gespeichert. Gleichzeitig wird in einem Schritt 22 mindestens ein Adressregister generiert, dessen Speicherinhalt Adressen von jedem der zwei oder mehreren Programme auf dem Pufferspeicher sind. In einem anschließenden Schritt 23 greifen die zwei oder mehreren Programme auf den Pufferspeicher über das minfdestens eine Adressregister zu.

Gemäß den Ausführungsformen der Figur 2 handelt es sich bei der Datenverarbeitungsanlage dabei wiederum um eine präemptive und/oder eine cooperative Multitasking-Datenverarbeitungsanlage.

Auch umfasst diese einen Mehrkernprozessor.

Weiter weist die Datenverarbeitungsanlage gemäß Figur 2 ein Echtzeit-Betriebssystem auf.

Das mindestens eine Adressregister wird bei dem Verfahren 20 gemäß Figur 2 dabei in Kontextspeicher abgelegt, auf welche die zwei oder mehreren Programme zugreifen.

Wie Figur 2 zeigt, weist das Verfahren 20 den weiteren Schritt 24 auf, dass der Pufferspeicher aus Pufferzeilen aufgebaut ist und die zwei oder mehreren Programme lesend und/oder schreibend auf den Pufferspeicher derart zugreifen können, dass dieselben Daten von den zwei oder mehreren Programmen aus jeweils in dieselbe Pufferzeile geschrieben werden. Hierdurch kann wiederum eine Speicherkohärenz sichergestellt werden. Durch die Sicherstellung von Kohärenz wird verhindert, dass für dieselbe Speicheradresse unterschiedliche, inkonsistente Daten zurückgeliefert werden.

Auch zeigt Figur 2 den Schritt 25, dass ein Inhalt des Pufferspeichers nach Beendigung des auszuführenden Programms in einen Systemspeicher der Datenverarbeitungsanlage geschrieben wird. Hierdurch kann gewährleistet werden, dass bei einem Neustart des entsprechenden Programms die einzelnen Programmteile, das heißt die zugehörigen Programmdaten, in der Datenverarbeitungsanlage in der letzten verwendeten Version vorliegen.

### Bezugszeichenliste

- 1: Datenverarbeitungsanlage
- 2: Prozessor
- 3: Systemspeicher
- 4: Pufferspeicher
- 5: Task
- 6: Task
- 7: Initialisierungsmodul
- 8: Eingabe/Ausgabe-Einheit
- 9: Adressgenerator
- 10: präemptive Multitasking-Datenverarbeitungsanlage
- 11: Mehrkernprozessor
- 12: Prozessorkerne
- 13: Kontextspeicher
- 14: Pufferzeilen
- 15: Pufferzeile
- 16: Schreibvorgang
- 17: Schreibvorgang
- 20: Verfahren
- 21: Verfahrensschritt
- 22: Verfahrensschritt
- 23: Verfahrensschritt
- 24: Verfahrensschritt
- 25: Verfahrensschritt

## Patentansprüche

1. Verfahren zum Betreiben eines Pufferspeichers einer Datenverarbeitungsanlage auf welchem zwei oder mehrere Programme parallel ablaufen können, wobei das Verfahren (20) folgende Schritte aufweist:
- Erzeugen eines Quellcodes für ein auszuführendes Programm und Speichern von benötigten Daten des auszuführenden Programms in dem Pufferspeicher (21);
- gleichzeitiges Generieren von mindestens einem Adressregister, dessen Speicherinhalt Adressen von jedem der zwei oder mehreren Programme auf dem Pufferspeicher sind (22);
- Zugreifen der zwei oder mehreren Programme auf den Pufferspeicher über das mindestens eine Adressregister (23);

2. Verfahren nach Anspruch 1, wobei die Datenverarbeitungsanlage eine präemptive und/oder cooperative Multitasking - Datenverarbeitungsanlage ist.

3. Verfahren nach Anspruch 1 oder 2, wobei die Datenverarbeitungsanlage einen Mehrkernprozessor umfasst.

4. Verfahren nach einem der Ansprüche 1 bis 3, wobei die Datenverarbeitungsanlage ein Echtzeit-Betriebssystem aufweist.

5. Verfahren nach einem der Ansprüche 1 bis 4, wobei das mindestens eine Adressregister in Kontextspeicher abgelegt wird, auf welche die zwei oder mehreren Programme zugreifen.

6. Verfahren nach einem der Ansprüche 1 bis 5, wobei der Pufferspeicher aus Pufferzeilen aufgebaut und die zwei oder mehreren Programme lesend und/oder schreibend auf den Pufferspeicher zugreifen können, derart, dass dieselben Daten von den zwei oder mehreren aus Programmen jeweils in dieselbe Pufferzeile geschrieben werden (24).

7. Verfahren nach einem der Ansprüche 1 bis 6, wobei ein Inhalt des Pufferspeichers nach Beendigung des auszuführenden Programms in einen Systemspeicher der Datenverarbeitungsanlage geschrieben werden (25).

8. Datenverarbeitungsanlage, auf welcher zwei oder mehrere Programme parallel ablaufen können und welche wenigstens einen Prozessor (2) mit einem Systemspeicher (3), in welchem zwei oder mehrere Programme zur Steuerung/Regelung des wenigstens einen Prozessors (2) abgelegt sind, wenigstens einen Pufferspeicher (4), ein Initialisierungsmodul (7) zum Erzeugen eines Quellcodes für ein auszuführendes Programm beim Start des auszuführenden Programms, eine Eingabe/Ausgabe-Einheit (8) zum Lesen von Daten in den wenigstens einen Pufferspeicher (4) und/oder zum Schreiben von Daten in den wenigstens einen Pufferspeicher (4), welche ausgebildet ist, mit Erzeugen des Quellcodes benötigte Daten des auszuführenden Programms in den wenigstens einen Pufferspeicher (4) zu speichern, sowie einen Adressgenerator (9) aufweist, wobei der Adressgenerator (9) ausgebildet ist, mit dem Speichern der benötigten Daten in den wenigstens einen Pufferspeicher (4) mindestens ein Adressregister zu generieren, dessen Speicherinhalt Adressen von jedem der zwei oder mehreren Programme auf dem Pufferspeicher (4) sind, und wobei die Eingabe/Ausgabe-Einheit (8) ausgebildet ist, von jedem der zwei oder mehreren Programme über das mindestens eine Adressregister auf den wenigstens einen Pufferspeicher (4) zuzugreifen.

9. Datenverarbeitungsanlage nach Anspruch 8, wobei die Datenverarbeitungsanlage (1) eine präemptive und/oder cooperative Multitasking-Datenverarbeitungsanlage (10) ist.

10. Datenverarbeitungsanlage nach Anspruch 8 oder 9, wobei der wenigstens eine Prozessor (2) ein Mehrkernprozessor (11) ist.

11. Datenverarbeitungsanlage nach einem der Ansprüche 8 bis 10, wobei die Datenverarbeitungsanlage (1) ein Echtzeit-Betriebssystem aufweist.

12. Datenverarbeitungsanlage nach einem der Ansprüche 8 bis 11, wobei die Datenverarbeitungsanlage (1) weiter Kontextspeicher(13) aufweist, in welche das mindestens eine Adressregister gespeichert wird und auf welche die zwei oder mehreren Programme zugreifen.

13. Datenverarbeitungsanlage nach einem der Ansprüche 8 bis 12, wobei der wenigstens eine Pufferspeicher (4) aus Pufferzeilen (14) aufgebaut ist und die Eingabe/Ausgabe-Einheit (8) ausgebildet ist dieselben Daten von jedem der zwei oder mehreren Programme aus in dieselbe Pufferzeile (15) zu schreiben.

14. Datenverarbeitungsanlage nach einem der Ansprüche 8 bis 13, wobei die Eingabe/Ausgabe-Einheit (8) ausgebildet ist einen Inhalt des wenigstens einen Pufferspeichers (4) nach Beendigung des auszuführenden Programms in den Systemspeicher (3) zu speichern.

15. Steuergerät für ein Kraftfahrzeug, welches eine Datenverarbeitungsanlage (1) nach einem der Ansprüche 8 bis 14 aufweist.
